# EUROPEAN PATENT APPLICATION

(11) **EP 4 489 088 A1**
(43) Date of publication of application: **08.01.2025**
(21) Application number: 23183099.3
(22) Date of filing: 03.07.2023
(51) Int. Cl.: H01M 4/04, H01M 4/139, C25D 3/02, C25D 7/06, C25D 17/00, C25D 17/12, C25D 5/34

(54) **A METHOD OF PRODUCING A BATTERY ELECTRODE**

(71) Applicant: CUSTOMCELLS Holding GmbH, 25524 Itzehoe (DE)
(72) Inventor: Werlich, Daniela, 25524 Itzehoe (DE)
(74) Representative: LKGLOBAL Lorenz & Kopf Patentanwalt Attorney at Law PartG mbB

(57) **Abstract**

The invention relates to a method (100) for producing a battery electrode, the method comprising:
providing an agent comprising a solvent and a metal containing compound,
wherein the solvent has a predetermined melting temperature,
exposing an electrode foil to an electric field in the agent, and
cooling the electrode foil to a temperature below the melting temperature.

## Description

### FIELD OF THE DISCLOSURE

The present disclosure relates to a method of producing a battery electrode.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries, including the battery electrodes (i. e. the anode or the cathode). Battery electrodes are conductive materials that serve as the positive and negative terminals in a battery.

Secondary batteries are based on the principle of moving metal ions as charge carriers from a cathode to an anode and vice versa. These secondary batteries experience a loss of these ions in the first charging step of the formation often referred to as first cycle efficiency. If left uncompensated the loss of metal ions causes a lower gravimetric and volumetric energy density and therefore worsens key characteristics of the secondary battery cell.

This loss is due to the formation of protective layers on the active material. These so-called SEI (solid electrolyte interface) are essential for the function of the cell as they prevent the penetration of electrolyte molecules into the anode material.

Accordingly, pre-metalation of the anodes has been proposed as a way to compensate for the consumption of metal ions in irreversible reactions during the formation of the solid electrolyte interface layer in the initial cycling. By introducing additional metal of the charge carrier species, the consumption of the solid electrolyte interphase may be compensated, leading to improved battery performance.

US9598789B2 relates to a method for lithiation of an intercalation-based anode or a non-reactive plating-capable foil or a reactive alloy capable anode, whereby utilization of said lithiated intercalation-based anode or a plating-capable foil or reactive alloy capable anode in a rechargeable battery or electrochemical cell results in an increased amount of lithium available for cycling, and an improved reversible capacity during charge and discharge.

Moreover, US2022020538A1 describes an electrode manufacturing method for manufacturing an electrode provided with an active material layer that contains an active material doped with alkali metal.

### SUMMARY OF THE DISCLOSURE

The present disclosure is described with the following method of producing a battery electrode, the method comprising:
providing an agent comprising a (first) solvent and a metal containing compound, wherein the solvent may have a predetermined melting temperature,
exposing an electrode foil to an electric field in the agent, and
cooling the electrode foil to a temperature below the melting temperature.

The battery electrode may be used in a battery cell, in particular a secondary battery.

By providing such a method the process of metallization of the battery electrode can be optimized for secondary batteries.

In particular, it becomes possible to add metal ions to the electrode foil based on the migration of metal ions (e. g. Li⁺, Na⁺, K⁺, Mg²⁺, Ca²⁺, Al³⁺) before the first charge in order to increase the capacity and lifetime of the final battery cell, e. g. by using in the agent suitable solvents, salts and/or metal-organyls.

Accordingly, the loss of these ions due to side reactions, e. g. the formation of protective layers on the active material (i. e. the SEI), can be compensated for by introducing additional metal ions into the battery electrode (e. g. the anode) using a wet chemical process (i. e. by exposing the electrode foil to the agent) prior to cell assembly. Through this compensation, the usable capacity of the final battery cell can be increased. By using a suitable solvent the electrode foil can be impregnated.

According to the present disclosure, the (first) solvent may be later used in the electrolyte of the final battery cell. The (first) solvent may be part of a mixture of solvents forming the electrolyte. The (first) solvent may be chosen such that it has a predetermined melting temperature, i. e. melting point, e. g. at a temperature above room temperature. In one example the melting point may be at 30 to 50°C, in particular at 35 to 45°C, more in particular at app. 40°C. The mixture may have a reduced melting point compared to the melting point of the first solvent, such that the mixture is a liquid in the battery cell. The first solvent may also dissolve a conducting salt in the electrolyte.

In addition, a reservoir of ions can be created that can be consumed over the life of the battery cell, improving the cycling stability of the battery cell.

The method of the present disclosure provides the following advantages. There is no need to dry and wash the battery electrode after the production process. The first solvent may namely be used as an electrolyte component in the final battery cell. Hence, there is e. g. no need to remove/wash out the solvent. Any decomposition products of the agent (e. g. of the metal containing compound) are desirably gaseous and less reactive and can thus be easily removed from the process (e. g. without any washing). Furthermore, a voltage increase of the applied electric field can increase the reaction rate. Moreover, the battery electrode can become less reactive due to the agent impregnation.

The method may further comprise, before exposing the electrode foil to the electric field, wetting the electrode foil with the agent.

Accordingly, the electrode foil can be wetted with the agent, before being exposed to the electric field. In this way it can be assured that the electrode foil can be sufficiently and effectively be impregnated with the agent, thereby increasing the created reservoir of ions.

The metal containing compound may be diffused in the agent (i. e. the solution containing the (first) solvent).

Exposing the electrode foil to an electric field may comprise introducing metal ions (i. e. originating from the metal containing compound) into the electrode foil.

Exposing the electrode foil to an electric field may comprise a wet electrochemical process. The electrode foil may be exposed to the electric field in a bath comprising the agent.

The same bath comprising the agent may be used for wetting the electrode foil and for exposing the electrode foil to the electric field in the agent. The electric field may be limited to a partial area of the bath.

For example, the electrode foil may be conveyed through a bath (having e. g. an elongated form) from a first area where no (or less or no effective) electric field is present, in order to wet the electrode foil, to and optionally across a second area, where the electric field is present. The movement may be done automatically or at least semi-automatically via a robotic system holding the and/or guiding the electrode foil.

The electric field may be caused by applying a potential between at least one counter electrode and the electrode foil or between two counter electrodes and the electrode foil.

The at least one counter electrode may e. g. have a flat form, e. g. defining a plane. The electrode foil may e. g. be arranged in parallel to the counter electrode when being exposed to the electric field. For example, the plane defined by the electrode foil may be in parallel to the plane of the counter electrode (or electrodes).

The method may further comprise after exposing the electrode foil to an electric field and before cooling the electrode foil: washing the electrode foil using the solvent (e. g. desirably only the solvent, i. e. without any metal containing compound solved therein). Optionally, the electrode foil may be washed such that the unreacted metal containing compound may be removed from the electrode foil. The metal containing compound may also be referred to as a precursor.

The electrode foil may be cooled such that the solvent becomes solid.

Accordingly, the solvent cannot run or drip off it but adheres as a solid to the battery electrode, e. g. when in a subsequent step the battery electrodes are stacked. Hence, no preceding drying is required and the workplace remains clean.

The metal containing compound may comprise one or several metal-salts and/or a metal-organic compounds.

The metal containing compound and the solvent may be chosen such that a decomposition product of the metal containing compound may be gaseous. The decomposition products may remain after the metal containing compound is exposed to the electric field. The decomposition products may comprise e. g. an anion of the metal containing compound.

The metal containing compound and/or the solvent may be chosen such that the decomposition products do not react with the solvent.

As a consequence, any gaseous decomposition product may escape without contaminating the solvent.

The metal salt may comprise MₓCO₃.

The metal-organic compound may comprise at least one of: naphthalene, anthracene, and butyllithium (e. g. tert-Butyllithium).

The agent may comprise an additive configured to increase the concentration of the metal component of the metal containing compound and/or configured to stabilize the agent. The additive may be or may comprise 1,4,7,10-tetraoxacyclododecane or other crown ethers.

The solvent may comprise ethylene carbonate (EC) and/or propylene carbonate (PC), in particular in case the battery electrode is intended for a lithium-ion battery.

The present disclosure further relates to a method of producing a battery cell, e. g. a lithium-ion battery. The method may comprise producing a battery electrode according to a method of the present disclosure. Alternatives to lithium for the battery cell of the present disclosure include e. g. sodium, potassium, magnesium, calcium or aluminium ions.

The solvent of the agent may also be referred to as first solvent.

The method may further comprise providing an electrolyte of the battery cell. The electrolyte may comprise a mixture of solvents chosen such that the mixture with the first solvent forms an azeotrope.

The mixture of solvents may thus e. g. comprise (beside other solvents) the first solvent.

Accordingly, the mixture of solvents may be chosen such that the mixture of solvents may have a reduced melting temperature compared to at least one or all of its single solvents.

The present disclosure further relates to a battery electrode obtained by a method according to the present disclosure.

The present disclosure also relates to a battery cell, comprising a battery electrode as described above.

The technology provided by the present disclosure may be applied in various types of batteries such as lithium-ion secondary batteries. Other compatible examples of batteries may be sodium-ion batteries, potassium-ion batteries, magnesium-ion batteries, calcium-ion batteries or aluminum-ion batteries.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1a shows a flowchart of a method 100 of producing a battery electrode according to examples of the present disclosure.
Fig. 1b schematically shows a manufacturing system 200 for producing the battery electrode in the method 100 of Fig. 1a.
Fig. 2 schematically shows a solid electrolyte interface (SEI) according to an example.
Fig. 3a schematically shows the charging behavior of a Li-Ion battery without an SEI according to an example.
Fig. 3b schematically shows the charging behavior of a Li-Ion battery with an SEI according to an example.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

The present disclosure generally relates to a method of producing a battery electrode. More in particular, the present disclosure relates to a wet electrochemical method of metalating an electrode foil for use in a secondary battery cell. By employing a solvent with a defined melting temperature as well as cooling the foil subsequent washing and drying steps can be omitted, therefore simplifying the process and lowering cost.

Known electrode manufacturing methods typically require washing out decomposition products of the precursor as well as energetically expensive drying steps.

Therefore, it remains desirable to overcome the aforementioned problems and in particular to provide a method of producing a battery electrode in which the number of production steps is reduced by omitting the cleaning and drying steps, and in which a reduction of the amount of energy required for production is achieved.

This problem is solved by providing a method according to the present disclosure. In the method a (first) solvent having a suitable melting point is used, such that the solvent can remain in solid form (due to the suitable melting point) on an electrode of suitable temperature, and does not need to be removed in the subsequent production method of the battery cell.

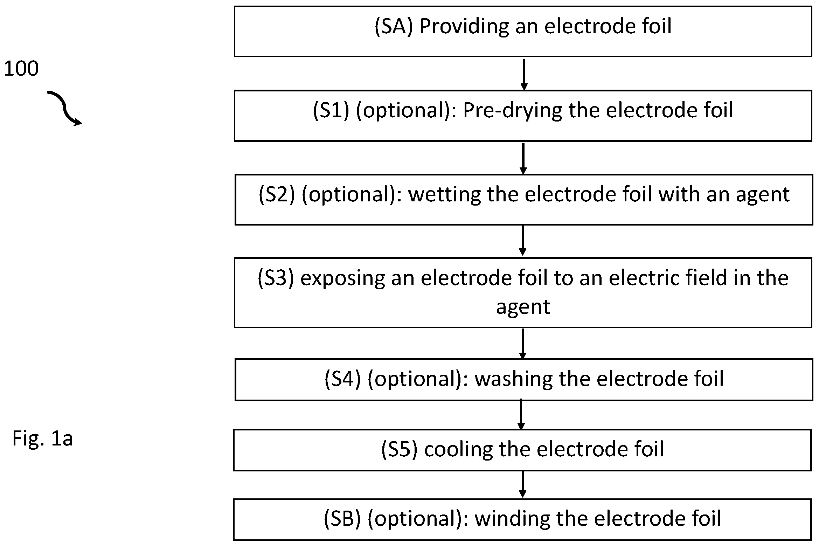

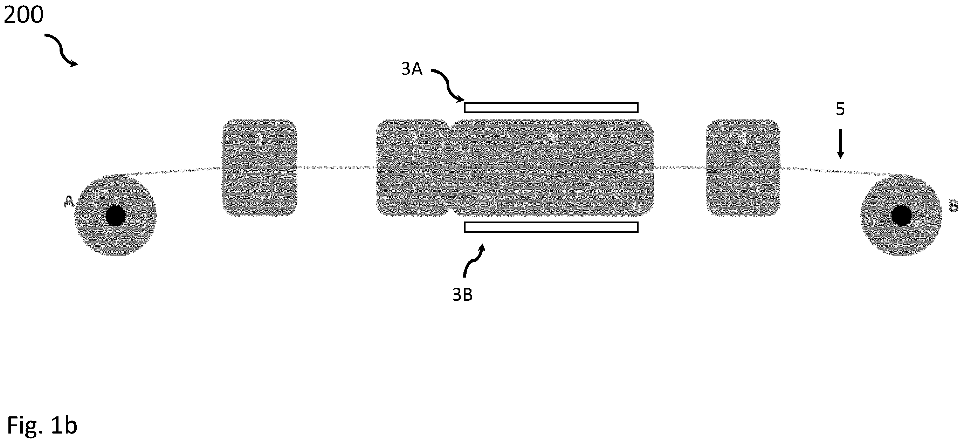

Fig. 1a shows a flowchart of a method 100 of producing (or more generally: of obtaining) a battery electrode according to examples of the present disclosure. Fig. 1b schematically shows a manufacturing system 200 for producing the battery electrode in the method 100 of Fig. 1a.

In a first step SA an electrode foil is provided. For example, the electrode foil may be provided by unwinding it from a coil. Accordingly, the system 200 may comprise a coil A on which an electrode foil is wound, and a device for unwinding the electrode foil (not shown in fig. 1b). The unwound electrode foil may e. g. be supplied by the device to a subsequent pre-drying device 1. Alternatively, the electrode foil may also be separated into single pieces in step SA. In this case the single pieces may be supplied to a subsequent pre-drying device 1.

The foil may be any kind of material sheets or other thin structures like a thin film or a thin layer. The foil may have any thickness and shape. The foil may, for example have a round or a rectangular shape.

The metalated battery electrode may be or may serve as an anode or a cathode of a battery cell.

The battery electrode foil may be a sheet of material that is used as one of the electrodes in a battery. The battery electrode foil may comprise any kind of material that may be suitable as battery electrode. The battery electrode foil may itself comprise a plurality of layers, e. g. a base foil inside and on one or both (outer) sides an electrode coating layer.

For example, the base foil may be made from a conductive metal such as copper or aluminum to serve as a current collector for the electrode. Other examples of materials that may be used in the base foil (i. e. to form the base foil) may include nickel-coated copper foil, aluminum-coated copper foil, stainless steel foil, copper-zinc alloy foil. The material of the base foil may be chosen to guarantee a good electrical conductivity, high thermal stability, and low resistance.

The electrode coating layer may, for example, comprise silicon and/or carbon material, metal oxides or phosphates and/or other conversion or intercalation materials feasible for secondary batteries. For example, the battery electrode foil may comprise a silicon suboxide-carbon (SiOx/C, 1 ≤ x ≤ 2) composite. The silicon suboxide-carbon (SiOx/C, 1 ≤ x ≤ 2) composite is just one example of a material that may be used. Accordingly, an active material may be applied to one or both sides of the base foil, i. e. to form the electrode coating layer. Exemplary active materials may contain but are not limited to metal oxides (lithium cobalt oxide, lithium manganese oxide, lithium nickel manganese cobalt oxide (NMC), lithium vanadium oxide), phosphates (lithium iron phosphate, and/or lithium manganese iron phosphate (LMFP)), Prussian blue and/or mixtures thereof on the cathode side (i. e. in case the battery electrode shall serve as a cathode), and/or carbon materials (e. g. graphite, hard carbon), silicon-based materials (silicon, silicon oxide, silicon carbide), titanates, sulfur-based compounds (sulfides, sulfur-polymer-gels), and/or mixtures thereof on the anode side (i. e. in case the battery electrode shall serve as an anode).

In an optional step S1 the electrode foil may be dried in a pre-drying device 1. This optional step may have the purpose to prevent side reactions of the accordingly dried electrode foil with components of the agent in a subsequent wetting step S2.

In an optional step S2, the electrode foil is wetted with an agent in a bathing device 2 (e. g. a container filled with the agent). The agent may comprise a solvent and a metal containing compound (cf. also further exemplary characteristics of the agent, as explained below). Accordingly, the electrode foil can be wetted sufficiently and effectively with the agent, before being exposed to the electric field thereby improving efficiency of the electrochemical reaction and increasing the created reservoir of ions.

In a step S3, the electrode foil is exposed to an electric field in the agent, e. g. in a bathing device 3 comprising the agent and being equipped with a one or several counter electrodes 3A, 3B for generating the electric field.

The same bath (or bathing device 2, 3) comprising the agent may be used for wetting the electrode foil and for exposing the electrode foil to the electric field in the agent. The electric field may be limited to a partial area of the bath. For example, the electrode foil may be conveyed in a bath (having e. g. an elongated form) from a first area 2 where no (or less or no effective) electric field is present, in order to wet the electrode foil, to a second area 3, where the electric field is present.

The electric field may be caused by applying a potential between at least one counter electrode 3A or 3B and the electrode foil or between two counter electrodes 3A, 3B and the electrode foil.

The at least one counter electrode may e. g. have a flat form, e. g. defining a plane. The electrode foil may e. g. be arranged in parallel to the counter electrode when being exposed to the electric field. For example, the plane defined by the electrode foil may be in parallel to the plane of the counter electrode (or electrodes).

Exposing the electrode foil to an electric field may comprise or imply a wet electrochemical process.

The electric field may have the effect of introducing metal ions (i. e. originating from the metal containing compound) into the electrode foil.

In particular, it becomes possible to add metal ions to the electrode foil based on the migration of metal ions (e. g. Li⁺, Na⁺, K⁺, Mg²⁺, Ca²⁺, Al³⁺) before the first charge in order to increase the capacity and lifetime of the final battery cell, e. g. by using suitable solvents, salts and/or metal-organyls in the agent.

Accordingly, the loss due to the formation of protective layers on the active material (i. e. the SEI) and/or due to other side reactions during the process of producing the battery electrode can be compensated for by introducing metal ions into the battery electrode (e. g. the anode) using a wet chemical process (i. e. by exposing the electrode foil to the agent in an electric field). Through this compensation, the usable capacity of the final battery cell can be increased.

In addition, a reservoir of ions can be created that can be consumed over the lifetime of the battery cell, improving the cycling stability of the battery cell.

Furthermore, by providing such a method the process of metalation of the battery electrode can be optimized for secondary batteries. According to the method of the present disclosure washing and drying operations may be omitted.

The solvent used in the agent may also be referred to as a first solvent. In particular, the electrode foil may be impregnated with this first solvent in the bath, as explained above. Using the first solvent may lead to several advantages, in case said first solvent is also used in the final battery cell. In particular, there is no need to dry and wash the battery electrode after the production process. The first solvent may namely be used in the cell as an electrolyte component in the final battery cell. Hence, there is e. g. no need to remove/wash out the solvent. Any decomposition products of the agent (e. g. of the metal containing compound) are desirably gaseous and less reactive and can thus be easily removed from the process (e. g. without any washing).

Accordingly, an electric field may be applied between the electrode foil and the counter electrodes 3A, 3B. A salt consisting of metal ions Mⁿ⁺ (1 ≤ n ≤ 3) and an anion A^{m-} (1 ≤ m ≤ 3) may be split in the field. The metal ion may be incorporated into the electrode.

The reaction may also be carried out using a metal-organic compound (M-R) dissolved in the bath. The metal containing compound may also be split in the field (radical or ionic) and the intercalation or alloying of the metal into the electrode foil can take place via the electric field between the electrodes.

In this step S3, a significant part of the SEI is typically already formed. In addition, a reservoir of ions may be built up in the electrode foil, which can also be used later for the formation of the remaining SEI or can be consumed over the cycle time, thus extending the lifetime of the cell.

The agent may be formed by diffusing the metal containing compound in the solvent.

The (first) solvent may for example comprise ethylene carbonate (EC) and/or Vinylene carbonate (VC), and/or other carbonates, in particular in case the battery electrode is intended for a lithium-ion battery.

The first solvent may have a melting point in the range of 15 to 75°C, more in particular of 30 to 50°C, e. g. at 40°C. Accordingly, in steps S2 and S3 the bath may be heated, such that the contained first solvent is liquid.

The metal containing compound may comprise a metal-salt and/or a metal-organic compound. The metal containing compound may have the function to metallize the electrode foil. In particular the metal containing compound may provide metal ions which are introduced into the electrode foil through the application of an electric field.

Accordingly, the used salt (e. g. metal ion salt Mⁿ⁺A^{m-}, 1 ≤ n, m ≤ 3) may be a relatively simple and inexpensive salt, which is thus usually also a stable salt. For example, the metal salt may comprise MₓCO₃. The metal-organic compound may also comprise at least one of: naphthalene, anthracene, and/or butyllithium (e. g. tert-Butyllithium).

The metal organic compounds such as compounds of naphthalene or anthracene or other organic compounds are more reactive than metal salts and thus can accelerate the reaction of metallization.

The decomposition product may remain after the metal containing compound is exposed to the electric field. The decomposition product may be or may comprise e. g. an anion of the metal containing compound. The metal containing compound and the solvent may be chosen such that a decomposition product of the metal containing compound may be gaseous. Accordingly, the decomposition product can escape without contaminating the bath in step S3, as e. g. the decomposition product does not react with the first solvent.

The metal containing compound and/or the solvent may be chosen such that the decomposition product does not react with the solvent.

As a consequence, the decomposition product may escape without contaminating the solvent.

The agent may further comprise an additive configured to increase the concentration of the metal component of the metal containing compound and/or configured to stabilize the agent. The additive may be or may comprise 1,4,7,10-tetraoxacyclododecane or other crown ethers. In other words, such agents can assist the diffusion of the salt in the bath and thus increase the salt concentration in the bath.

The agent is desirably stable within the voltage limits of the applied electric field, so that the electrode foil is impregnated with the agent.

In an optional step S4, the electrode foil may be washed in a washing device 4, e. g. a container comprising a solvent. The used solvent may in particular be the same as the solvent used in the agent (i. e. the first solvent), however without any metal containing compound. Accordingly, the electrode foil may be washed such that the unreacted metal containing compound may be removed from the electrode foil.

Accordingly, a solvent (i. e. the first solvent) may be used in the reaction bath, which does not need to be evaporated after the metallization process (cf. step S3), but can be used directly "wet" (i.e. soaked) in the cells. As an example, in the case of lithium-ion ethylene carbonate (EC) or propylene carbonate (PC) may be used as first solvent.

In a subsequent step S5, the electrode foil is cooled such that the solvent becomes solid, e. g. in a cooling device (not shown in fig. 1b). For example, the electrode foil may be cooled from a first temperature of e. g. more than 45°C or from a first temperature range of e. g. 50 to 60°C (which may be present in at least one of steps S2 and S3) to a second, lower temperature of e. g. less than 15°C or less than 10°C, or to a second temperature range of e. g. 0 to 15°C (which may be present in at least one of steps S2 and S3). Accordingly, the electrode foil and thus the first solvent (of e. g. ethylene carbonate having a melting point at app. 36.4°C) may be cooled to a temperature being significantly below the melting point of the first solvent, such that the first solvent reliably becomes solid. The electrode foil may also be cooled by exposing it to cooled air. Accordingly, the solidified or "frozen" solvent cannot drip off but sticks as a solid to the battery electrode, e. g. when in a subsequent step the battery electrodes are stacked or wound on a coil. Hence, no preceding drying is required and the workplace of the system 200 is not contaminated by the first solvent.

Accordingly, since the method may be conducted at higher temperatures (e. g. > 45°C) before the cooling step S4, the first solvent, which has a melting point above e. g. 40°C, becomes a solid by cooling in step S4.

In a step SB the electrode foil may be wound on a coil B, e. g. in a winding device (not shown in fig. 1b). Alternatively, in case the electrode foil has been separated into single pieces in step SA, the pieces may also be stacked.

The electrode foil which has been processed by the steps S1 to S5 (and optionally wound up or stacked in step SB) may also be referred to as a produced battery electrode. In other words, the processed electrode foil may be used or may constitute a battery electrode in a battery cell. However, the processed electrode foil may be further processed in subsequent steps (which are not described here in detail) before it is used as a battery electrode.

The battery electrode may be used in a battery cell, in particular a secondary battery. In other words, the method of fig. 1a may be part of a method of producing a battery cell. Said method of producing a battery cell may further comprise providing an electrolyte of the battery cell. The electrolyte be or may comprise a mixture of different solvents.

The mixture of solvents may thus e. g. comprise (beside other solvents) the first solvent. The mixture of solvents may be chosen such that the mixture with the first solvent forms an azeotrope. The first solvent may also dissolve a conducting salt in the electrolyte.

The mixture may have a reduced melting point compared to the melting point of the first solvent, such that the mixture is a liquid in the battery cell in a conventional use (e. g. at temperatures above -20°C or at least above 0°C). The mixture may for example comprise or consist of the first solvent and further solvents, such as at least one of or a combination of some of: optionally further first solvent as e. g. ethylene carbonate (EC), eimethyl carbonate (DMC), eiethyl carbonate (DEC), and ethyl methyl carbonate (EMC). In one example, the mixture may consist of 30% of EC and 70% of DMC. Accordingly, the mixture of solvents may be chosen such that the mixture of solvents may have a reduced melting temperature compared to at least one or all of its single solvents, in particular compared to the first solvent. Accordingly, while the first solvent is solid after being cooled in step S4 (e. g. at room temperature or slightly less, e. g. a temperature between 15°C and 30°C or 20°C and 25°C which may be lower than the melting point of the first solvent), the mixture of solvents may be liquid at this temperature.

Accordingly, while the first solvent alone is solid after being cooled at step S5 the mixture of solvents may be liquid at the same temperature. Hence, the first solvent in its solid state does not contaminate the workplace during any processing step after step S5, e. g. step SB of winding the electrode foil. At the same time, the mixture of solids may be liquid at the same temperature and thus may be used as electrolyte in the final battery cell.

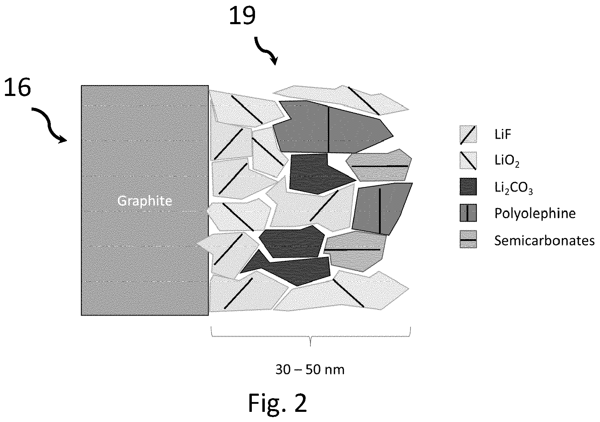

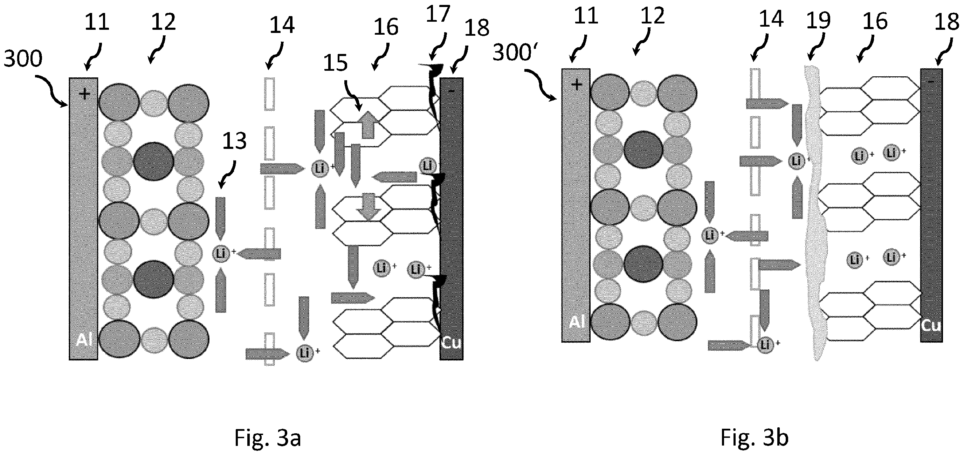

Fig. 2 schematically shows a solid electrolyte interface (SEI) according to an example. More in particular, fig. 2 shows a SEI of e. g. a lithium-ion battery cell. Fig. 2 and Fig. 3a and 3b are intended to illustrate the background of the present disclosure, in particular the characteristics and functions of a SEI.

In the production of battery cells which use metal ions as charge carriers, there is a loss of ions in the formation step. This is due to the formation of protective layers (i. e. a SEI). However, the formation of this SEI blocks the passage between the electrolyte and electrodes heavily affecting the performance of the battery.

As schematically shown in fig. 2, an SEI 19 may consist of different materials, e. g. at least one of LiF, Li₂O, Li₂CO₃, polyolephines, and carbonate esters. A SEI may typically have a thickness of 30 to 50 nm. The anode 16 on which the SEI is arranged (i. e. on which it is formed) may comprise or consist of graphite or carbon. Li is consumed to form the SEI and thus this Li cannot be used later in the cell. For example, in a graphite anode there may be up to 5% loss of Li due to SEI formation, or in silicon anode there may up to 20% Li loss due to SEI.

Fig. 3a schematically shows the charging behavior of a Li-Ion battery 300 cell without an SEI according to an example. Fig. 3b schematically shows the charging behavior of a Li-Ion battery cell 300' with an SEI 19 according to an example.

Beside the difference regarding the SEI, the examples of fig. 3a and fig. 3b may correspond to each other. In both examples, a cathode current collector 11 of the battery cell may comprise and/or consist of aluminum (Al). Moreover, the anode current collector 18 of the battery cell may comprise and/or consist of copper (Cu). The battery cell may further comprise a separator 14 and an electrolyte (not shown in the figures 3a, 3b) between the anode and the cathode (or to be more precise, the SEI 19 in fig. 3b). The electrolyte may correspond to that one described above in context of fig. 1a, 1b. o.

Moreover, the battery cell may comprise a cathode 12 (e. g. comprising lithium metal oxide) and an anode 16 (e. g. comprising graphite or carbon.

The arrow-shaped symbols 13 schematically show the solvent within the electrolyte. The solvent is polar and therefore will coordinate around the positive Li-Ion

The arrows 15 furthermore schematically show that, in the case that no or an insufficient SEI is formed, the solvent molecules of the electrolyte will be brought into the active material of the anode. Because these solvent molecules like EC, EMC, DEC, etc. are significantly larger than Li+, the anode crystal lattice can break up or delaminate from the current collector. The cell can thus have a decreased functionality.

Reference sign 17 schematically indicates the deterioration of the anode by breaking away from the anode current collector, in case no SEI is present.

As schematically shown in fig. 3b, some of the charge carriers (Li⁺) can be bound in the SEI. These charger carriers are then no longer available as capacity. However, without an SEI, as shown in fig. 3a, solvent molecules can be drawn into the anode active material and cause rapid aging of the cell. Thus, an SEI is required for a metal-ion cell to function as shown in fig 3b. The loss of charge carriers depends on the materials but can be as high as e. g. 30%.

To reduce this loss, an electrode foil may be processed (i. e. metalated) as described in the method of producing a battery electrode according to the present disclosure. Accordingly, as described above an electrode may be guided in a bath between counter electrodes (cf. in particular step S3).

Throughout the description, including the claims, the term "comprising a" should be understood as being synonymous with "comprising at least one" unless stated otherwise. In addition, any range set forth in the description, including the claims should be understood as including its end value(s) unless stated otherwise. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. A method of producing a battery electrode, the method comprising:
providing an agent comprising a solvent and a metal containing compound,
wherein the solvent has a predetermined melting temperature,
exposing an electrode foil to an electric field in the agent, and
cooling the electrode foil to a temperature below the melting temperature of the solvent.

2. The method of claim 1,
further comprising before exposing the electrode foil to the electric field:
wetting the electrode foil with the agent.

3. The method of claim 1 or 2 wherein:
exposing the electrode foil to an electric field comprises a wet electrochemical process, and/or
the electrode foil is exposed to the electric field in a bath comprising the agent, and/or
the same bath comprising the agent is used for wetting the electrode foil and
for exposing the electrode foil to the electric field in the agent, wherein the electric field is limited to a partial area of the bath.

4. The method according to any one of the preceding claims,
wherein the electric field is caused by applying a potential between at least one counter electrode and the electrode foil or between two counter electrodes and the electrode foil.

5. The method according to any one of the preceding claims,
wherein the at least one counter electrode has a flat form and the electrode foil is arranged in parallel to the counter electrode when being exposed to the electric field.

6. The method according to any one of the preceding claims,
further comprising after exposing the electrode foil to an electric field and before cooling the electrode foil: washing the electrode foil using the solvent, wherein optionally the electrode foil is washed such that the unreacted metal containing compound is removed from the electrode foil.

7. The method according to any one of the preceding claims,
wherein the electrode foil is cooled such that the solvent solidifies.

8. The method according to any one of the preceding claims,
wherein the metal containing compound comprises a metal salt and/or a metal-organic compound.

9. The method according to any one of the preceding claims,
wherein the metal containing compound is chosen such that a decomposition product after exposition to the electric field is gaseous, and/or
the metal containing compound and/or the solvent are chosen such that the decomposition product does not react with the solvent.

10. The method according to any one of the preceding claims,
wherein the metal salt comprises MₓCO₃, and/or
the metal-organic compound comprises at least one of: naphthalene, anthracene, and butyllithium.

11. The method according to any one of the preceding claims,
wherein the agent comprises an additive configured to increase the concentration of the metal containing compound and/or configured to stabilize the agent.

12. The method according to any one of the preceding claims,
wherein the solvent comprises ethylene carbonate (EC) and/or propylene carbonate (PC).

13. A method of producing a battery cell, the method comprising:
producing a battery electrode according to any one of the preceding claims.

14. The method of claim 13,
wherein the solvent of the agent is a first solvent, and
the method further comprising: providing an electrolyte of the battery cell, wherein the electrolyte comprises a mixture of solvents chosen such that the mixture with the first solvent forms an azeotrope, and/or such that the mixture of solvents has a reduced melting temperature compared to at least one or all of its single solvents.

15. A battery electrode obtained by a method according to any one of the preceding claims.
